# FASCICULE DE BREVET EUROPEEN

(11) **EP 2 152 498 B1**
(45) Date de publication et mention de la délivrance du brevet: **29.05.2019**
(21) Numéro de dépôt: 08805971.2
(22) Date de dépôt: 10.06.2008
(51) Int. Cl.: B29C 70/38, B29C 70/54, B29B 11/16, D02G 3/02, D02G 3/26, D02G 3/40, B29K 707/04, B29K 105/10

(54) **PROCÉDÉ DE FABRICATION DE PIÈCES COMPOSITES PRÉSENTANT AU MOINS UNE ZONE COURBE ET PIÈCES OBTENUES PAR CE PROCÉDÉ**
VERFAHREN ZUR HERSTELLUNG VON VERBUNDSTOFFTEILEN MIT MINDESTENS EINEM GEBOGENEN BEREICH
METHOD FOR MAKING COMPOSITE PARTS HAVING AT LEAST ONE CURVED AREA

(30) Priorité: 12.06.2007 FR 0755680; 16.07.2007 FR 0756503
(43) Date de publication de la demande: 17.02.2010
(73) Titulaire: Hexcel Reinforcements, 01120 Dagneux (FR)
(72) Inventeur: BERAUD, Jean-Marc, F-38140 Rives (FR); BRUYERE, Alain, F-38630 Les Avenieres (FR); THIEL, Jean-Benoît, F-38110 La Chapelle de la Tour (FR); DUCARRE, Jacques, F-38110 La Tour du Pin (FR)
(74) Mandataire: Sarlin, Laure V.
(86) Numéro de dépôt international: PCT/FR2008/051036
(87) Numéro de publication internationale: WO 2008/155505

(56) Documents cités:
- EP-A- 0 706 876
- WO-A-2005/123500
- GB-A- 1 513 829
- JP-A- H01 235 612
- US-A- 5 326 524

## Description

La présente invention concerne le domaine technique des pièces composites. L'invention a pour objet un procédé de fabrication d'une pièce composite composée d'un ensemble de nappes de fils de renfort superposées inclues, en partie au moins, dans une matrice polymérique, ladite pièce présentant au moins une zone courbe. L'invention trouve notamment application dans le domaine des pièces composites utilisées dans l'industrie automobile, aéronautique ou navale.

La fabrication de pièces ou d'articles composites, c'est-à-dire comprenant, d'une part, un ou plusieurs renforts ou nappes fibreuses et, d'autre part, une matrice de résine de type thermoplastique, thermodurcissable ou un mélange des deux, peut, par exemple, être réalisée par un procédé dit "direct" ou par un procédé dit "indirect". Un procédé direct est défini par le fait qu'un ou plusieurs renforts fibreux sont mis en oeuvre à l'état "sec" (c'est-à-dire sans la matrice finale), la résine ou matrice, de type thermoplastique, thermodurcissable ou un mélange des deux, étant mise en oeuvre séparément, par exemple par injection dans le moule contenant les renforts fibreux (procédé "RTM", de l'anglais Resin Transfer Molding), par infusion (dans un moule, au travers de l'épaisseur des renforts fibreux : procédé "LRI", de l'anglais Liquid Resin Infusion ou procédé "RFI", de l'anglais Resin Film Infusion), ou bien encore par enduction/imprégnation manuelle au rouleau ou au pinceau, sur chacune des couches unitaires de renfort fibreux, appliquées de manière successive sur la forme. Un procédé indirect est défini par le fait que les fibres et la résine sont au préalable associées avant d'être mises en oeuvre et les renforts fibreux mis en oeuvre sont nommés préimprégnés.

Pour les procédés RTM, LRI ou RFI, il faut en général tout d'abord fabriquer une préforme fibreuse de la forme de l'article fini désiré puis imprégner cette préforme d'une résine thermoplastique, thermodurcissable ou d'un mélange des deux. La résine est injectée ou infusée par différentiel de pressions puis thermocompressée pour entraîner son durcissement après polymérisation. Dans les renforts fibreux adaptés aux procédés directs, les fils de renfort sont généralement associés pour conférer un caractère unitaire à la pièce, appelée alors préforme, par un collage avec un liant polymérique dont le pourcentage en masse par rapport à la masse totale du renfort fibreux (c'est-à-dire fils de renfort + liant polymérique) varie de 0,1 à 25 %, et avantageusement de 3 à 10 %. Dans le cas des préimprégnés adaptés aux procédés indirects, le liant représente, quant à lui, de 20 à 60%, de préférence de 30 à 40 % de la masse totale du renfort fibreux (c'est-à-dire fils de renfort + liant polymérique).

Les pièces composites utilisées dans l'industrie automobile, aéronautique ou navale, sont en particulier soumises à des exigences très strictes, en termes de propriétés mécaniques.

Pour les applications dans le domaine aéronautique, aérospatial, automobile, notamment, il est parfois nécessaire de disposer de pièces dont au moins une partie est destinée à constituer le contour d'une ouverture et présente, par exemple, une forme du type annulaire ou ellipsoïdale, comme c'est par exemple le cas pour la constitution de châssis, tuyères, entrées de réacteurs, ou tout type d'éléments de renfort destiné à être positionné en bordure d'une ouverture ou à servir de renfort de zones trouées, tels que alésages, éléments de renfort de bielle, encadrement de coin de porte, encadrement de hublot ou de pare-brise, trous d'homme ... De telles pièces sont classiquement obtenues par drapage ou empilement de plis, ceux-ci pouvant être classiquement constitués de nappes de fils s'étendant de manière unidirectionnelle ou multiaxiale ou formant un tissu, les fils pouvant être associés, au sein d'une nappe, par un fil de couture ou un liant polymérique, notamment sous la forme d'une poudre, d'un film, d'un voile ou d'un fil de liage thermofusible. Chaque pli peut, par exemple, être obtenu par dépose de fils sur une surface de dépose. Il est également connu de GB 1 513 829, US 5326524 et JP H01235612 d'utiliser un pli constitué de fils torsadés.

Dans le domaine des composites, les fils sont composés d'un ensemble de filaments s'étendant sensiblement parallèlement les uns aux autres. Les fils présentent donc une certaine largeur. En fonction de la pièce finale souhaitée, il peut être souhaité de disposer d'une nappe ou pli dans laquelle les fils empruntent des trajectoires courbes, par exemple du type spirale, ellipsoïdale ou encore une trajectoire comportant au moins deux directions principales formant entre elles un angle différent de 0° ou 180° et reliées entre elles par une portion d'arc de cercle. Aussi, les inventeurs ont constaté que, dans ces cas notamment, lorsque, sur la surface de dépose, qui peut être plane ou non plane, les fils empruntent des trajectoires non rectilignes, et notamment courbes, des ondulations sont observées, ce qui entraîne une non-homogénéité du dépôt. Les inventeurs ont mis en évidence que ces ondulations provenaient du fait que les filaments situés au niveau des deux trajectoires extrêmes du fil devaient suivre des trajectoires de longueurs différentes. Les trajectoires extrêmes désignent les deux trajectoires que suit le fil de part et d'autre de sa largeur (c'est-à-dire au niveau de ses bords externes), mesurée parallèlement à sa surface de dépose.

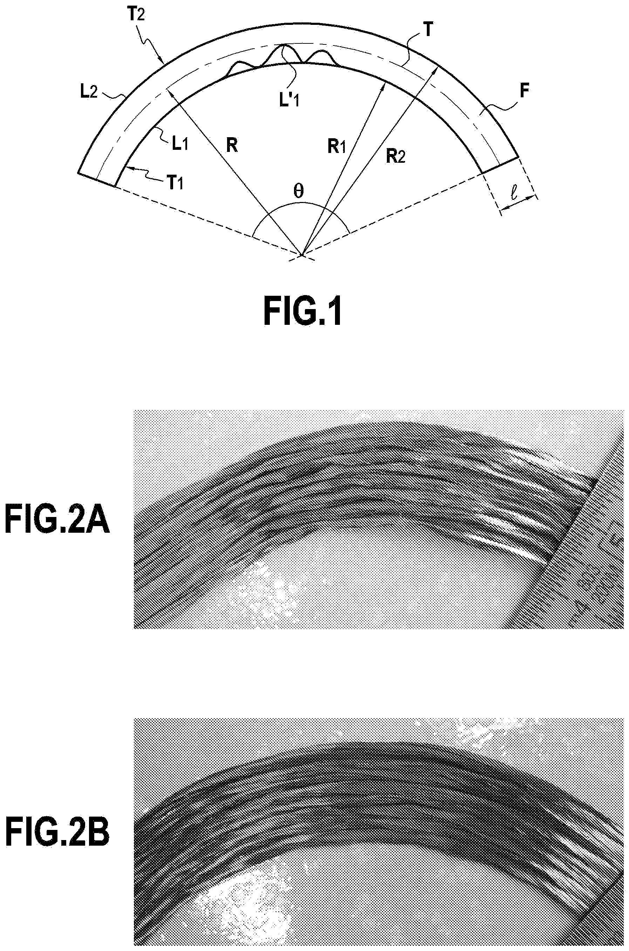

La **Figure 1** illustre ce phénomène dans le cas d'un fil déposé sur une surface plane selon une trajectoire en arc de cercle. Le fil **F** présente une largeur **l** mesurée parallèlement à la surface de dépose. La trajectoire **T** que suit la fibre moyenne (ou filament médian) du fil **F** est une portion d'arc de cercle de rayon **R** sur un angle **θ**. Il apparaît donc que la longueur de la trajectoire que doit suivre le fil n'est pas la même sur toute sa largeur **l**, les trajectoires extrêmes **T₁** et **T₂** présentant des longueurs différentes.

En effet, à l'extérieur de l'arc de cercle, la trajectoire **T₂**, dite externe ou maximale, est un arc de cercle de rayon **R₂** et à l'intérieur de l'arc de cercle, la trajectoire **T₁**, dite interne ou minimale, est un arc de cercle de rayon **R₁**. La trajectoire **T₁** présente donc une longueur **L₁** égale à **θR₁** et la trajectoire **T₂** une longueur **L₂** égale à **θR₂**, **L₂** étant supérieure à **L₁**. Par conséquent, au niveau de la trajectoire interne **T₁**, les filaments, qui ne présentent aucune élasticité, ont une longueur **L'₁**, qui est en fait égale à la longueur **L₂**, supérieure à leur trajectoire, ce qui entraîne un phénomène d'ondulation dû à la présence de longueur de filaments hors ou dans le plan de dépose. De telles irrégularités sont susceptibles de présenter des points de faiblesses prématurées lors de sollicitations mécaniques et donc d'entraîner une chute des performances mécaniques de la pièce obtenue. Dans le document US 5 326 524, dans la conception de tiges coudées renforcées par des fibres continues, le flambement des fibres de renfort est réduit en conformant les fibres continues dans une conformation hellicoïdale dans la tige, avant ou quant la tige est coudée.

Dans ce contexte, la présente invention se propose d'apporter un procédé de fabrication de pièces composites permettant de remédier à ces inconvénients. L'invention concerne donc un procédé de fabrication d'une pièce composite composée d'un ensemble de nappes de fils de renfort superposées inclues, en partie au moins, dans une matrice polymérique, ladite pièce présentant au moins une zone courbe, procédé dans lequel sont mises en oeuvre des étapes de drapage ou d'empilement de pli conformément à la revendication 1 et une pièce en matériau composite conformément à la revendication 11.

Selon un mode de réalisation particulier de l'invention, la zone courbe correspond à un bord courbe de la pièce et les fils torsadés de la nappe de fils torsadés s'étendent selon une trajectoire sensiblement parallèle au bord courbe.

Par « bord », on entend aussi bien un bord externe, situé à une extrémité de la pièce, qu'un bord interne qui délimite une ouverture ou une zone trouée au sein de la pièce.

Dans la suite de la description, on nommera pli de « nappe de fils torsadés » un pli composé de fils torsadés associés au sein du pli grâce à une résine ou liant polymérique et positionné au niveau d'une zone ou d'un bord courbe. Par « fil de renfort torsadé », on entend un fil auquel on a appliqué une torsion, c'est-à-dire une rotation relative des bords externes du fil, autour de sa fibre moyenne, de manière à ce que ceux-ci décrivent une trajectoire en hélice, c'est-à-dire que la trajectoire en chaque point fait un angle sensiblement constant avec une direction donnée. Au sein d'une « nappe de fils torsadés », chaque fil est torsadé individuellement. Ainsi, lorsque le fil emprunte une trajectoire présentant au moins une zone courbe sur la surface de la nappe (qui peut être plane ou non plane), la torsion appliquée au fil permet de compenser le fait que les deux trajectoires extrêmes du fil présentent des longueurs différentes. Les trajectoires extrêmes désignent les deux trajectoires que suit le fil de part et d'autre de sa largeur, mesurée parallèlement à la surface de la nappe. Sur la zone courbe, l'axe de rotation de la trajectoire d'un fil sur la surface de la nappe est normal au plan tangent à la surface de la nappe. L'application d'une telle torsion permet d'éviter les ondulations constatées avec la dépose de fil non torsadé, et ce à l'échelle des filaments constitutifs du fil ou de chaque fil, lorsque la « nappe de fils torsadés » est réalisée à l'aide de plusieurs fils. De façon avantageuse, la « nappe de fils torsadés » est composée d'un seul fil présentant une torsion sensiblement identique sur toute sa longueur ou d'une série de fils torsadés individuellement et présentant, entre eux et sur toute leur longueur, une torsion sensiblement identique.

Par « nappe de fils », on entend un ensemble de fils s'étendant sensiblement parallèlement à une surface. A titre d'exemple, non limitatif, dans une nappe de fils, les fils peuvent, par exemple, tous s'étendre selon une même direction, parallèlement les uns aux autres et ainsi former une nappe unidirectionnelle. Les fils peuvent encore s'étendre selon au moins deux directions, par exemple orthogonale l'une par rapport à l'autre, et ainsi former un multiaxial. Les fils peuvent encore être disposés de manière à former un tissu, ou encore une nappe de fils torsadés telle que définie dans le cadre de l'invention.

Un pli est constitué d'une nappe de fils, dans laquelle les fils peuvent, éventuellement être associés, au sein de la nappe, par couture ou par collage, au moyen d'un liant polymérique, notamment sous la forme d'une poudre, d'un film, d'un voile ou d'un fil de liage thermofusible.

La description qui suit, en référence aux figures annexées, permet de mieux comprendre l'invention :
La **Figure 1** présente schématiquement le phénomène d'ondulation observé dans le cas de la dépose d'un fil non torsadé sur une surface, selon une trajectoire sur une surface de dépose, la dite trajectoire présentant au moins une zone courbe sur la surface de dépose.
La **Figure 2B** est une photo d'un pli de nappe de fils torsadés, la **Figure 2A** étant une photo d'un pli analogue dans le cas de fils non torsadés.
Les **Figure 3** et **4** représentent des vues de dessus de plis de nappe de fils torsadés.
La **Figure 5** représente le repère utilisé pour la détermination de l'orientation des fils au sein d'une pièce, le 0° étant positionné selon l'axe principal de la pièce.
La **Figure 6** représente une pièce obtenue par empilement de plis.
La **Figure 7** est une photographie d'un pli de nappe de fils torsadés, sous la forme d'un disque, analogue à celui présenté **Figure 4**.
La **Figure 8** représente schématiquement un dispositif de dépose d'une nappe de fils torsadés.
Les **Figures 9A** et **11** sont des vues en perspective de pièces conformes à l'invention. La **Figure 9B** est une vue selon la coupe **XIB** de la pièce présentée **Figure 9A**.
La **Figure 10** présente, sous la forme de tableaux, l'évolution des diamètres externes des disques, ainsi que les empilements réalisés dans l'exemple 3 selon l'invention.
La **Figure 12** présente, sous la forme de tableaux, l'orientation des disques, l'évolution de leur diamètre externe, ainsi que les empilements réalisés dans l'exemple comparatif C3.
La **Figure 13** représente schématiquement un dispositif permettant de tester les performances mécaniques en traction des pièces obtenues.
Les **Figures 14** et **15** illustrent des étapes préparatoires à la réalisation des tests mécaniques en traction.
Les **Figures 16A** et **16B** présentent respectivement des photos des pièces selon l'exemple comparatif C1 et selon l'invention, après le test mécanique en traction.
La **Figure 17** est une photographie d'un pli de nappe de fils torsadés, sous la forme d'un disque, analogue à celui présenté **Figure 4**.

Dans la « nappe de fils torsadés », le fil est torsadé de façon à au moins compenser les différences de longueur que présentent les trajectoires extrêmes du fil de part et d'autre de sa largeur mesurée parallèlement à la surface de la nappe. Au niveau de la zone courbe, le ou les fils de la nappe de fils torsadés vont présenter une trajectoire courbe avec, pour chaque fil, des trajectoires extrêmes du fil de part et d'autre de sa largeur qui ont des longueurs différentes. Cette trajectoire courbe est comprise dans un plan défini par les fils qui lui sont adjacents. Notamment, dans le cas d'une pièce sensiblement plane, le pli de « nappe de fils torsadés » pourra être positionné de manière à s'étendre, au niveau de la région adjacente à un bord courbe, dans un plan perpendiculaire au bord courbe. Ainsi, la torsion appliquée sur les fils de la « nappe de fils torsadés » permet d'éviter les ondulations dues aux surlongueurs qui seraient normalement constatées, en l'absence de torsion. Dans le cadre de l'invention, l'application d'une torsion permet d'éviter les ondulations constatées avec la dépose de fil non torsadé. La **Figure 2** présente deux photos : la **Figure 2A** présente un pli obtenu par dépose de fils non torsadés, alors que la **Figure 2B** présente un pli obtenu par dépose de fils torsadés. Dans le deuxième cas, le pli obtenu est plus homogène et sans ondulation, puisque la torsion permet d'obtenir une homogénéité de la longueur des filaments à l'intérieur du fil.

En effet, un fil est en général constitué d'un ensemble de fils ou filaments et comporte, en général, dans le cas des fils de carbone, de 3 000 à 80 000 filaments, avantageusement de 12 000 à 24 000 filaments. Les fils de renfort utilisés dans le cadre de l'invention sont en carbone. Dans des modes de réalisation qui ne font pas partie de la présente invention, les fils sont en une matière choisie parmi les céramiques, verres, silices, basaltes ou aramides, ou tout autre matériau utilisé dans le domaine des matériaux composites, les fibres pouvant être naturelles ou synthétiques. Les céramiques utilisables sont notamment le carbure de silicium et les oxydes réfractaires, par exemple, alumine et zircone. Conformément à l'invention, des fils de carbone de 3 à 24K, sont utilisés. Les fibres constitutives peuvent être discontinues, craquées ou de préférence continues. Les fils utilisés présentent en général une section droite transversale sensiblement circulaire (qualifiés de fils ronds) ou, de préférence, sensiblement parallélépipédique ou elliptique (qualifiés de fils plats). Ces fils présentent une certaine largeur et épaisseur. A titre d'exemple, un fil plat, c'est-à-dire avant application de la torsion, de carbone de 3K et d'un titre de 200 tex présente généralement une largeur de 1 à 3 mm, un fil plat de carbone de 12K et d'un titre de 446 tex, une largeur de 2 à 5 mm, un fil plat de 12K d'un titre de 800tex, une largeur entre 3 et 7mm, un fil plat de carbone de 24K et d'un titre de 1600 tex, une largeur de 5 à 12 mm et un fil plat de carbone de 24K et d'un titre de 1040 tex, une largeur de 5 à 10 mm. Un fil plat de carbone de 3 000 à 24 000 filaments présentera donc le plus souvent une largeur de 1 à 12 mm. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le le « ASM Handbook », ISBN 0-87170-703-9, ASM International 2001).

Un tel résultat, à savoir l'absence d'ondulation au sein de la « nappe de fils torsadés» est atteint comme suit:
Selon une première solution alternative de la présente invention, la « nappe de fils torsadés » est réalisée avec au moins un fil de carbone de 3K et de 200 tex présentant une torsion de 10 à 70t/m, préférentiellement de 15 à 40t/m, lorsque le rayon interne minimal de la trajectoire du fil est compris dans la gamme allant de 10 à 500 mm.

Selon une autre solution alternative de la présente invention, la « nappe de fils torsadés » est réalisée avec au moins un fil de carbone de 6K et de 223 tex présentant une torsion de 15 à 80t/m, préférentiellement de 50 à 70t/m, lorsque le rayon interne minimal de la trajectoire du fil est compris dans la gamme allant de 10 à 500 mm.

Selon encore une autre solution alternative de la présente invention, la « nappe de fils torsadés » est réalisée avec au moins un fil de carbone de 6K et de 400 tex présentant une torsion de 15 à 80t/m, préférentiellement de 40 à 60t/m, lorsque le rayon interne minimal de la trajectoire du fil est compris dans la gamme allant de 10 à 500 mm.

Selon encore une autre solution alternative de la présente invention, la « nappe de fils torsadés » est réalisée avec au moins un fil de carbone de 12K et de 446 tex présentant une torsion de 10 à 80t/m, préférentiellement de 10 à 60t/m est déposé, lorsque le rayon interne minimal de la trajectoire du fil est compris dans la gamme allant de 10 à 500 mm. Pour un rayon interne minimal inférieur à 50 mm, supérieure à 40t/m, et notamment inférieure ou égale à 60t/m est, de préférence, appliquée. Pour un rayon interne minimal supérieur à 50 mm, une torsion inférieure ou égale à 40t/m, notamment de 10 à 40t/m est, de préférence, appliquée.

Selon encore une autre solution alternative de la présente invention, la « nappe de fils torsadés » est réalisée avec au moins un fil de carbone de 24K et de 1040 tex présentant une torsion de 10 à 40 t/m, préférentiellement de 10 à 25 t/m, lorsque le rayon interne minimal de la trajectoire du fil est compris dans la gamme allant de 20 à 150 mm. En particulier, lorsque le rayon interne minimal de la trajectoire du fil est compris dans la gamme allant de 20 à 40 mm, la torsion sera supérieure à 20 t/m et lorsque le rayon interne sera supérieur à 40 mm, la torsion pourra être inférieure ou égale à 20 t/m.

Selon un autre mode de réalisation particulier, la « nappe de fils torsadés » peut être réalisée à partir d'un seul ou d'une série de fils de renfort dont la torsion est soit de type S, soit de type Z, préférentiellement de type S lorsque la dépose est effectuée, lors de la réalisation de la « nappe de fils torsadés » sur la zone courbe de la trajectoire du ou des fils, dans le sens horaire. Pour les définitions de ce que l'on entend par torsion de type S ou Z, on pourra se référer à l'ouvrage « Handbook of Weaving », p 16-17 de Sabit Adanur, Professor, department of Textile Engineering, Auburn, USA, ISBN 1-58716-013-7.

Dans d'autres modes de réalisation préférés de l'invention, les plis sont composés d'au moins un fil de renfort constituant une nappe et le caractère cohérent de chaque pli peut être assuré directement par le positionnement des fils dans le cas d'un tissu ou dans le cas d'un unidirectionnel ou d'un multiaxial par couture ou par un liant polymérique, agissant par collage, choisi parmi les polymères thermodurcissables, les polymères thermoplastiques et les mélanges desdits polymères, éventuellement sous la forme de poudre, ou de résine auto-adhésive ou hot-melt. Dans la cas des plis de nappe de fils torsadés, les fils sont associés entre eux au sein de la nappe, grâce à un liant polymérique, qui agit par collage.

Selon un mode de réalisation de l'invention, l'ensemble des plis, présente un pourcentage en masse de liant polymérique par rapport à la masse totale des plis (c'est-à-dire fils de renfort + liant polymérique) compris dans la gamme allant de 0,1 à 25 %, et avantageusement de 3 à 10 %.

Selon un autre mode de réalisation de l'invention, l'ensemble des plis, présente un pourcentage en masse de liant polymérique par rapport à la masse totale des plis (c'est-à-dire fils de renfort + liant polymérique) est compris dans la gamme allant de 20 à 60 %, et avantageusement de 30 à 40 %.

Ces pourcentages sont donnés pour l'ensemble total des plis, chaque pli pouvant bien entendu présenter un taux de liant polymérique différent. Néanmoins, de façon avantageuse, le pourcentage de liant que contient chaque pli sera relativement homogène.

Selon une variante de réalisation de l'invention, le procédé selon l'invention est mis en oeuvre pour la réalisation d'une pièce composite comportant un bord courbe qui délimite une ouverture et comprend au moins une étape de drapage ou d'empilement, sur au moins une zone adjacente à ce bord courbe, d'au moins un pli en matériau composite, comprenant une nappe, nommée « nappe de fils torsadés », composée d'au moins un fil de renfort torsadé, s'étendant selon une trajectoire sensiblement parallèle au bord courbe.

Pour la réalisation de telles pièces notamment, la « nappe de fils torsadés » est, par exemple, composée d'un seul fil torsadé déposé bord à bord selon des trajectoires sensiblement parallèles les unes aux autres ou d'une série de fils torsadés s'étendant sensiblement parallèlement les uns aux autres et de façon jointive.

Selon un mode de réalisation particulier, la « nappe de fils torsadés » est composée d'une spirale de fils torsadés, chaque spire étant jointive avec la suivante.

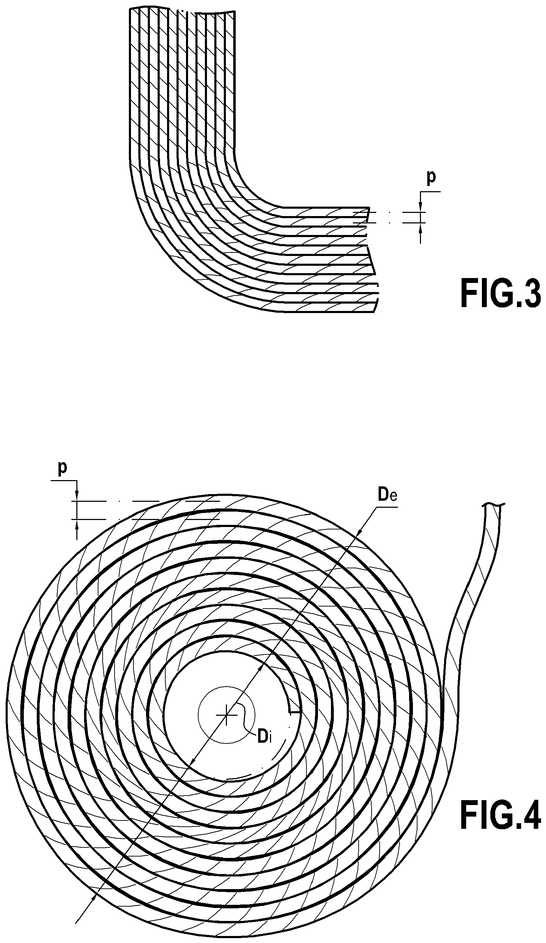

En particulier, la « nappe de fils torsadés » est composée d'un seul fil torsadé déposé bord à bord selon des trajectoires sensiblement parallèles les unes aux autres (à l'exception des points de rebroussement) ou d'une série de fils torsadés déposés sensiblement parallèlement les uns aux autres et de façon jointive. En fonction des possibilités autorisées par le grammage, le titre et la torsion des fils utilisés, les fils sont positionnés pour minimiser, voire éviter la présence de jour entre deux fils voisins. Un tel exemple de réalisation où le pli se présente sous la forme d'un ruban courbe, est par exemple illustré, de façon schématique, **Figure 3****.** Selon un exemple de réalisation, un fil est déposé de manière à former une spirale de fils torsadés, chaque spire étant déposée bord à bord avec la suivante. Un tel exemple de réalisation où le pli se présente sous la forme d'un disque, est, par exemple, illustré, de façon schématique, **Figure 4****.** De telles « nappes torsadées » peuvent être obtenues par dépose de fils torsadés sur une surface non plane, ou de préférence, sur une surface plane, lorsque la pièce composite à réaliser présente une surface sensiblement plane.

Dans le cadre de l'invention, le procédé comprend des étapes d'empilement ou de drapage d'autres plis, par exemple de plis de nappes unidirectionnelles, de multiaxiaux, et/ou de tissus. Ces plis sont découpés de manière à présenter la forme souhaitée, notamment au niveau de la zone ou du bord courbe de la pièce. Il est possible d'alterner pli de « nappe de fils torsadés » avec un autre pli ou bien d'insérer un pli de « nappe de fils torsadés » entre une série de deux, trois, quatre ou plus d'autres plis. Au niveau de la zone courbe, un ou plusieurs plis de nappe de fils torsadés pourront être empilés ou drapés. Le pli ou les plis de « nappe de fils torsadés » peut ou peuvent être positionnés localement, c'est-à-dire uniquement à proximité d'une zone adjacente à un bord courbe, ou encore, s'étendre sur toute la longueur de la pièce.

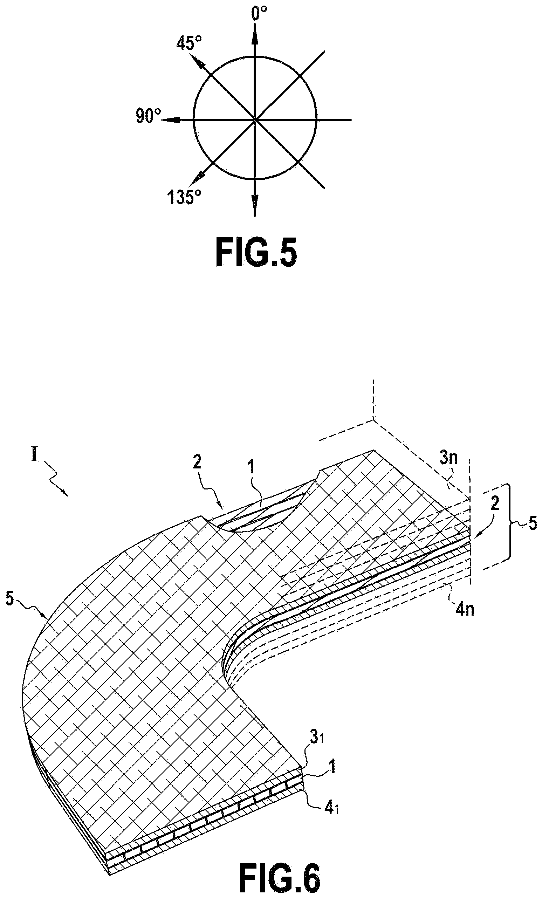

De façon avantageuse, les étapes d'empilement ou de drapage de plis de nappes unidirectionnelles ou de tissus sont réalisées en orientant les fils des nappes, de manière à obtenir des pourcentages massiques de fibres au sein des plis de la pièce composite autres que les plis de « nappe de fils torsadés », orientées dans les directions faisant un angle de 0°, 45° et 135°(avec isoproportion de 45 et 135°), et 90° avec l'axe principal de la pièce, de 25/50/25, 40/40/20, 50/40/10 ou 10/80/10. L'axe principal de la pièce est généralement le plus grand axe de la pièce. Le 0° se confond avec cet axe et les angles 45, 35 et 90 ° sont représentés sur la **Figure 5****.** Dans la majorité des cas, le pourcentage correspondant aux orientations 45° et 135° est réparti, à parts égales, entre ces deux orientations. Le choix des orientations 40/40/20, 50/40/10, permet d'optimiser les performances de la pièce obtenues en fonction des efforts auxquels la pièce est soumise et le gain de masse souhaitée. Avec une orientation 25/50/25, la pièce obtenue, que se soit par un procédé direct ou indirect, est quasi-isotrope et aucune direction n'est privilégiée. L'orientation 40/40/20 sera principalement utilisée avec des plis de nappes unidirectionnelles préimprégnées, par exemple de 134 g/m², 194 g/m² ou 268 g/m², pour l'obtention de pièces par procédé indirect. L'orientation 50/40/10 sera principalement utilisée avec des plis de multiaxiaux ou de tissus, pour l'obtention de pièces par procédé direct ou indirect. Le drapage 50/40/10 pourra également être utilisé pour des nappes de grammage inférieur ou égal à 220g/m². L'orientation 10/80/10 conduit à des pièces fortement orientées, et sera, par exemple, utilisée pour des applications de type poutrelle ou poutre, où se produisent de fortes sollicitations en torsion.

Le procédé selon l'invention peut être mis en oeuvre pour la réalisation de tout type d'éléments de renfort destiné à être positionné en bordure d'une ouverture ou à servir de renfort de zones trouées, de pièces nécessitant un renfort local courbe, ou de pièces comportant une ouverture nécessitant un renfort local courbe, tels que des éléments de renfort d'encadrement pour coin de porte, trappe d'accès, trou d'homme ou trappe de visite, des encadrements de hublot ou de pare-brise, des chapes de bielle, des attaches de bielles, des alésages pour assemblage, des pièces d'attache ou des pièces comportant toute autre zone d'introduction de charge, telle qu'une zone de fixation.

La présente invention a également pour objet, les pièces composites conformément à la revendication 11.

Selon un mode de réalisation particulier, la zone courbe correspond à un bord courbe de la pièce et les fils torsadés de la nappe de fils torsadés s'étendent selon une trajectoire sensiblement parallèle au bord courbe. Une tel mode de réalisation est, par exemple, illustré **Figure 6**. Un bord externe **1** de la « nappe de fils torsadés » **2** constitue, avec les bords externes **3₁** à **3ₙ** des autres nappes **4₁** à **4ₙ** sur lesquelles elle est empilée, le bord courbe **5** de la pièce **I**. Notamment, dans le cas d'une pièce sensiblement plane, la « nappe de fils torsadés » est positionnée de manière à s'étendre dans un plan sensiblement perpendiculaire au bord courbe. La ou les « nappes torsadées » peut ou peuvent être positionnées localement, c'est-à-dire uniquement à proximité d'une région adjacente à une zone ou un bord courbe de la pièce comme ce sera le cas de l'exemple 3a) qui sera détaillé par la suite, ou encore, s'étendre sur toute la surface de la pièce.

De façon avantageuse, chaque « nappe de fils torsadés » est constituée d'un seul et unique fil ou d'une série de fils qui présentent tous, sensiblement, la même composition, largeur et torsion. Toutes les variantes, décrites précédemment pour le procédé selon l'invention, s'applique *mutatis mutandis* aux pièces composites selon l'invention.

Dans un premier temps, la constitution d'un pli de « nappe de fils torsadés » va être détaillée. Dans le cadre de l'invention, pour la réalisation d'un pli de « nappe de fils torsadés », une torsion déterminée est appliquée au fil avant sa dépose. Une telle torsion peut, par exemple, être obtenue au moyen d'une retordeuse. En théorie, pour éviter les surlongueurs de filaments, il suffirait d'appliquer une torsion de 1 tour à répartir sur la longueur de la trajectoire sur laquelle le fil présente des trajectoires extrêmes différentes (qui correspondent aux trajectoires des bords externes du fil). En pratique, le collage du fil et la réorganisation des filaments à l'intérieur de celui-ci lors de sa dépose, permet d'appliquer une torsion différente de un tour par longueur de trajectoire. A titre d'exemple, une torsion de 5 à 100 t/m, de préférence de 10 à 80t/m pourra être appliquée.

Conformément à l'invention, dans le cas d'un fil de carbone de 3K et de titre 200 tex, une torsion de 10 à 70t/m, préférentiellement de 15 à 40t/m sera appliquée ; dans le cas d'un fil de carbone de 6K et de 223 tex, une torsion de 15 à 80t/m, préférentiellement de 50 à 70t/m sera appliquée, dans le cas d'un fil de carbone de 6K et de 400 tex, une torsion de 15 à 80t/m, préférentiellement de 40 à 60t/m sera appliquée, dans le cas d'un fil de carbone de 12K et de 446Tex, une torsion de 10 à 80t/m, préférentiellement de 10 à 60t/m sera appliquée et, dans le cas d'un fil de carbone de 24K et de 1040Tex, une torsion de 10 à 40t/m, préférentiellement de 10 à 25t/m sera appliquée.

La largeur et le titre du fil correspondent, soit à la largeur moyenne mesurée du fil, soit aux données du fournisseur. Le rayon minimal de la trajectoire interne du fil est déterminé de la façon suivante. On calcule sur toute la trajectoire du fil, pour chaque zone dans lesquelles la trajectoire sur la surface de dépose n'est pas rectiligne, le rayon de la trajectoire interne T₁ du fil et on prend le plus petit rayon obtenu sur l'ensemble de ces zones. Lorsqu'une série de fils parallèles les uns aux autres sont déposés, simultanément ou successivement, on appliquera, de préférence, à chaque fil une seule et même torsion.

La torsion appliquée sera ajustée par l'homme du métier en fonction du rayon minimal interne (plus faible rayon qu'empruntent les bords internes du fil) et du rayon maximal externe (plus grand rayon qu'empruntent les bords externes du fil) que présente le ou les fils sur l'ensemble de la « nappe de fils torsadés » à réaliser, des espaces laissés libres entre deux fils consécutifs, ainsi que du titre du fil et de la masse surfacique de carbone désirée. De manière préférée, on appliquera une torsion suffisante pour minimiser, voire totalement éliminer les ondulations, mais la moins importante possible afin d'optimiser les performances mécaniques du matériau obtenu.

De façon préférée, la « nappe de fils torsadés » est réalisée avec un minimum de fils nécessaires pour minimiser les points d'arrêt. Lorsque plusieurs fils sont déposés parallèlement les uns aux autres, simultanément ou successivement, la même torsion sera, de préférence, appliquée à tous les fils constitutifs de la « nappe de fils torsadés » et ce de façon individuelle. Pour déterminer la torsion à appliquer, on appliquera, préférentiellement, à l'ensemble des fils, la torsion nécessaire pour avoir un dépôt satisfaisant au niveau de la trajectoire du fil qui présente le rayon de courbure interne minimal, cette torsion étant forcément suffisante pour obtenir un dépôt sans ondulation dans les parties de la trajectoire où le fil (ou les autres fils) présente un rayon de courbure interne supérieur. Une attention particulière sera portée, sur l'absence d'espaces libres entre les fils, et notamment sur les zones proches de leur rayon externe maximal.

Lors de la constitution d'un pli de « nappe de fils torsadés », le ou les fils sont déposés sur une surface de dépose. La liaison des fils sur la surface de dépose est réalisée par collage, grâce à un liant polymérique. Aucune liaison par couture ou tricotage n'est réalisée. Par liant polymérique, on entend une composition polymérique contenant un polymère ou un mélange de polymères, notamment un polymère thermoplastique ou un système thermodurcissable comprenant ou non un durcisseur et/ou un accélérateur. Le liant polymérique peut être utilisé soit en quantité juste suffisante pour lier les fils à la surface sur laquelle ils sont déposés, soit en quantité suffisante pour également jouer le rôle de matrice dans la pièce composite finale : le liant représente, alors, de 20 à 60%, de préférence de 30 à 40 % de la masse totale du renfort fibreux (c'est-à-dire fils de renfort + liant polymérique). Le liant polymérique, peut notamment se présenter sous la forme d'une poudre, d'un film, d'un voile ou d'un fil de liage thermofusible.

Le pli peut être directement obtenu avec le pourcentage de liant souhaité ou bien, subir avant son drapage ou empilement, une étape intermédiaire d'imprégnation pour obtenir le pourcentage souhaité, selon un cycle de température et de pression fonction de la nature de la résine thermodurcissable, thermoplastique ou du mélange des deux utilisé, et connu de l'homme de métier. Il est également possible dans certains cas, notamment dans le cas de l'utilisation d'un voile ou d'un film, même lorsque le taux de liant polymérique correspond au taux final souhaité, d'effectuer une étape intermédiaire de traitement thermique, afin d'imprégner les fils.

Selon un mode de réalisation préféré d'une « nappe de fils torsadés », utilisée dans le cadre de l'invention, les fils utilisés, peuvent être, secs avant dépose, c'est-à-dire qu'ils ne sont ni imprégnés, ni enduits, ni associés à un quelconque liant polymérique avant leur passage dans les moyens de torsion, ni, de préférence, avant leur dépose. En effet, de façon avantageuse, afin de mieux maitriser la dépose du fil, celle-ci sera appliquée sur un fil sec. Aussi, le fil torsadé est constitué essentiellement de fibres ou de filaments qui représentent au moins 98% de sa masse, le taux massique d'ensimage standard pouvant représenter au plus 2% de la masse du fil. Dans ce cas, le liant polymérique est, par exemple, appliqué sur la surface de dépose, soit en amont de la dépose, soit au fur et à mesure de la dépose. La surface de dépose peut donc être recouverte d'un film, d'un voile ou d'une poudre de liant polymérique.

Selon une forme de réalisation préférée d'un pli de « nappe de fils torsadés », il est utilisé, en tant que liant polymérique, une poudre thermoplastique ou une poudre thermodurcissable ou, encore, un mélange des deux. Parmi les poudres thermoplastiques utilisables, il est possible de citer, à titre d'exemples non limitatifs, les poudres de polyoléfine, de polyamide, de Polyéthersulfone (PES), de Poly(Sulfure de Phénylène) (PPS), PolyEtherEtherCétone (PEEK), ou Polyétherimide (PEI), tandis que, parmi les poudres thermodurcissables, il est possible de citer, à titre d'exemples non limitatifs, les poudres de polymères époxydes avec ou sans agent durcisseur, les poudres phénoliques, les poudres de polyester. Le procédé prévoit alors d'assurer un chauffage de la zone de dépose du fil de renfort. Ce chauffage peut être réalisé, soit au niveau du point de dépose du fil de renfort par une résistance chauffante intégrée au dispositif de dépose du fil, soit au moyen d'une source rayonnante de chaleur dirigée vers la zone de dépose du fil de renfort.

Pour la réalisation d'un pli de « nappe de fils torsadés », il peut également être mis en oeuvre une surface de support temporaire préalablement recouverte, en partie au moins, par un liant polymérique choisi parmi les poudres thermoplastiques et thermodurcissables, éventuellement en mélange, les colles auto-adhésive ou les colles hot-melt, les voiles thermoplastiques et thermodurcissables, éventuellement en mélange, nécessitant une activation thermique.

Pour la réalisation d'un pli de « nappe de fils torsadés », il est également possible de mettre en oeuvre, en tant que liant polymérique, une colle, de même nature chimique que les poudres ci-dessus, utilisée sous forme fondue encore appelée « hot-melt ». Cette résine hot-melt est alors déposée sur le support de dépose, soit au fur et à mesure de la dépose du fil de renfort et en amont de la dépose du fil de renfort, soit lors d'une étape antérieure.

Selon un autre mode de réalisation, pour la réalisation d'un pli de « nappe de fils torsadés », il est mis en oeuvre, en tant que liant polymérique, une solution ou une émulsion pulvérisable d'au moins une résine adhésive, telle que, par exemple mais non exclusivement, une résine polyacrylique, polyvinylique ou polyuréthane.

Selon un autre mode de réalisation néanmoins non préféré, pour la réalisation d'un pli de « nappe de fils torsadés », il est possible d'associer le fil au liant polymérique, en amont de sa dépose. Ceci peut être fait par mise en oeuvre d'un fil thermoplastique guipé sur le fil de renfort qui est alors chauffé au niveau de son point de dépose. Le fil thermoplastique peut être de toute nature appropriée et, par exemple mais non exclusivement, comprendre un fil en Polyamide, Polyoléfine, Polyéthersulfone (PES), PolyétherétherCétone (PEEK), Poly(Sulfure de Phénylène) (PPS), ou Polyétherimide (PEI). Il est également possible de mettre en oeuvre un liant polymérique, intimement liée au fil de renfort pour former un fil de renfort hybride. Ainsi, il est possible d'utiliser, en tant que liant polymérique des filaments de matière thermoplastique ou thermodurcissable, par exemple de la famille des phénoxy, de même nature que les fils thermoplastiques ci-dessus, qui seront mélangés à des filaments de matériau de renfort, mélange qui sera filé pour former un fil de renfort hybride.

Lors de la constitution d'un pli de nappe de fils torsadés, le fil de renfort est, de préférence, déposé de façon continue ou, au contraire, en segments discontinus. Il est avantageux, par exemple dans le cas d'une dépose d'un fil en spirale, de déposer le fil de manière continue, sur la longueur maximale du fil, de manière à minimiser, voire éviter les points de coupure. Selon un exemple de réalisation, un fil est déposé de manière à former une spirale de fils torsadés, chaque spire étant déposée bord à bord avec la suivante. Un tel exemple de réalisation où la «I nappe de fils torsadés » se présente sous la forme d'un disque, est, par exemple, illustré, de façon schématique, **Figure 4****.** Dans le cas de réalisation de « nappe de fils torsadés » présentant une partie rectiligne et une partie dite de coin, sous la forme d'un ruban courbe, où les fils sont déposés selon une portion d'arc de cercle comme présenté **Figure 2B** ou **3**, il pourra être avantageux de déposer simultanément une série de fils parallèles, de manière à couvrir en une seule fois la largeur de la « nappe de fils torsadés » souhaitée.

Afin de pouvoir donner avec précision la trajectoire souhaitée au fil, lors de la constitution d'un pli de « nappe de fils torsadés », et que celui-ci la conserve après sa dépose, celui-ci sera amené, sans tension ou avec un minimum de tension jusqu'au point de dépose, de manière à ce que celui-ci soit déposé à l'état de repos.

Lors de la constitution d'un pli de « nappe de fils torsadés », en fonction de la nature du fil de renfort et du liant polymérique utilisé, il sera appliqué, sur le fil de renfort lors de sa dépose, une pression comprise entre 0,01 bar et 30 bar et, de préférence, comprise entre 0,1 bar et 1 bar. De même, selon la nature du liant polymérique utilisé et du fil de renfort et, plus particulièrement, en cas d'utilisation d'un liant polymérique thermoplastique ou thermo-adhésif, le point de dépose du fil de renfort sera chauffé à une température comprise entre 50 °C et 450 °C et, de préférence, comprise entre 50 °C et 150 °C.

La constitution de la pièce composite nécessite le drapage et l'empilement d'autre plis, en plus du ou des plis de « nappe de fils torsadés ». Pour les autres plis, notamment comprenant une nappe unidirectionnelle ou multiaxiale, les fils seront également le plus souvent associés, au sein de chaque pli, par couture ou encore par collage grâce à un liant polymérique tel que précédemment défini, dont le pourcentage en masse est choisi, en fonction du procédé direct ou indirect sélectionné pour la réalisation de la pièce finale. Dans le cas de pli de nappe tissée, la présence d'un liant polymérique n'est pas nécessaire, la cohésion de la nappe pouvant être assurée par le tissage. Le liant permet également, si besoin, d'assurer le maintien des plis entre eux, soit lors de la constitution intermédiaire d'une préforme, dans le cas des procédés directs, soit grâce à la pégosité (communément appelée « tack ») du liant polymérique à température ambiante, dans le cas des procédés indirects.

Ensuite, si la quantité de liant polymérique présente dans l'ensemble des plis n'est pas suffisante pour réaliser la matrice polymérique (cas d'un procédé direct), une résine ou matrice, de type thermoplastique, thermodurcissable ou un mélange des deux, est alors ajoutée, par exemple par injection dans le moule contenant les plis (procédé "RTM", de l'anglais Resin Transfer Molding), par infusion (dans un moule, au travers de l'épaisseur des plis : procédé "LRI", de l'anglais Liquid Resin Infusion ou procédé "RFI", de l'anglais Resin Film Infusion), ou bien encore par enduction/imprégnation manuelle au rouleau ou au pinceau, sur chacun des plis, appliqués de manière successive sur la forme du moule utilisé. La matrice utilisée peut être de même nature que le liant polymérique ou du moins, compatible avec ce dernier. Si les différents plis utilisés sont des préimprégnés qui contiennent une quantité de liant polymérique suffisante pour la réalisation de la pièce, il n'est pas nécessaire d'ajouter une matrice polymérique complémentaire, la matrice polymérique étant alors constituée par le liant polymérique présent dans les plis de préimprégnés. Les plis de préimprégnés peuvent être directement fournis avec le taux de liant polymérique souhaité ou être soumis préalablement, à leur drapage ou empilement, à une étape intermédiaire d'imprégnation selon un cycle de température et de pression fonction de la nature de la résine thermodurcissable, thermoplastique ou du mélange des deux, et connu de l'homme de métier. Il est également possible dans certains cas, notamment dans le cas de l'utilisation d'un voile ou d'un film, même lorsque le taux de liant polymérique correspond au taux final souhaité, d'effectuer une étape intermédiaire de traitement thermique, afin d'imprégner les fils.

La pièce composite est ensuite obtenue après une étape de traitement thermique.

Au final, pour les matrices thermodurcissables, la pièce composite est obtenue selon un cycle classique de traitement thermique des polymères considérés recommandé par les fournisseurs de ces polymères, et connu de l'homme du métier. Cette étape ultérieure de traitement thermique, conduisant au polymère thermodur correspondant, est classiquement employée dans les différents procédés de réalisation de pièces composites de l'art antérieur.

Pour les polymères thermoplastiques, la pièce composite est obtenue généralement par un cycle de consolidation classique des polymères considérés, en effectuant un traitement thermique à une température supérieure notamment au point de fusion, recommandé par les fournisseurs de ces polymères, et connu de l'homme du métier.

Les exemples ci-après permettent d'illustrer l'invention.

### Exemple 1 de réalisation d'un pli de « nappe de fils torsadés »

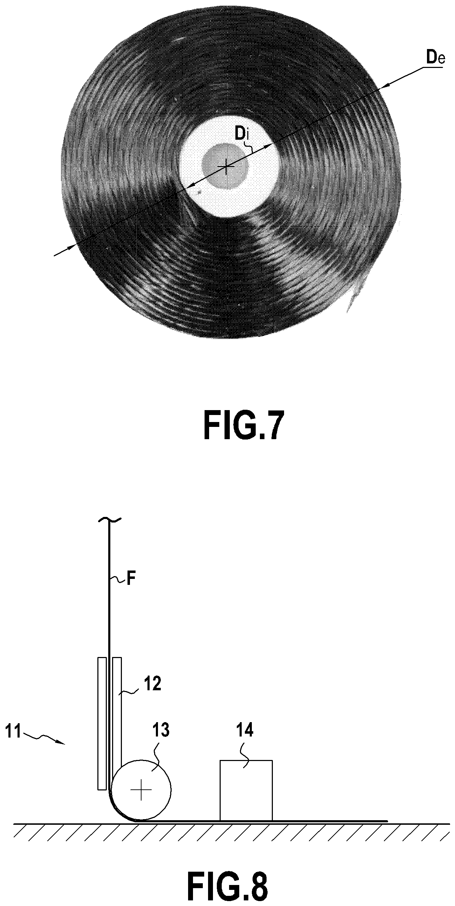

Une spirale telle que représentée sur la représentation schématique de la **Figure 4** ou sur la photo de la **Figure 7**, de diamètre **Dᵢ** interne de 15 mm et de diamètre externe **Dₑ** est réalisée par dépose de fil de carbone 3K de 200 tex (HTA 5131 de la société Tenax) torsadé avec une torsion de 50 t/m. Le pas **p** de dépose entre 2 trajectoires moyennes consécutives est de 0,98 mm. Le fil est déposé selon une spirale sur un papier silicone poudré à 15 g/m² avec une résine époxy contenant un durcisseur (E01, de la société Hexcel). Le pli obtenu présente une épaisseur de 0,2 mm.

Le dispositif schématisé sur la **Figure 8** est mis en oeuvre. Le fil **F** est amené, sans tension au niveau du doigt de dépose **11** dans lequel une résistance chauffante **12** à une température de 300°C est intégrée. Le fil est appliqué sur la surface au moyen d'un rouleau applicateur **13** de 2 mm de rayon avec une pression au contact de 10KPa. La vitesse de défilement du fil est synchronisée avec la vitesse d'avancement du doigt de dépose qui est de 20 mm/s. En aval du point de dépose, un élément de refroidissement **14** est appliqué sur le fil de manière à appliquer sur ce dernier une pression de 10KPa.

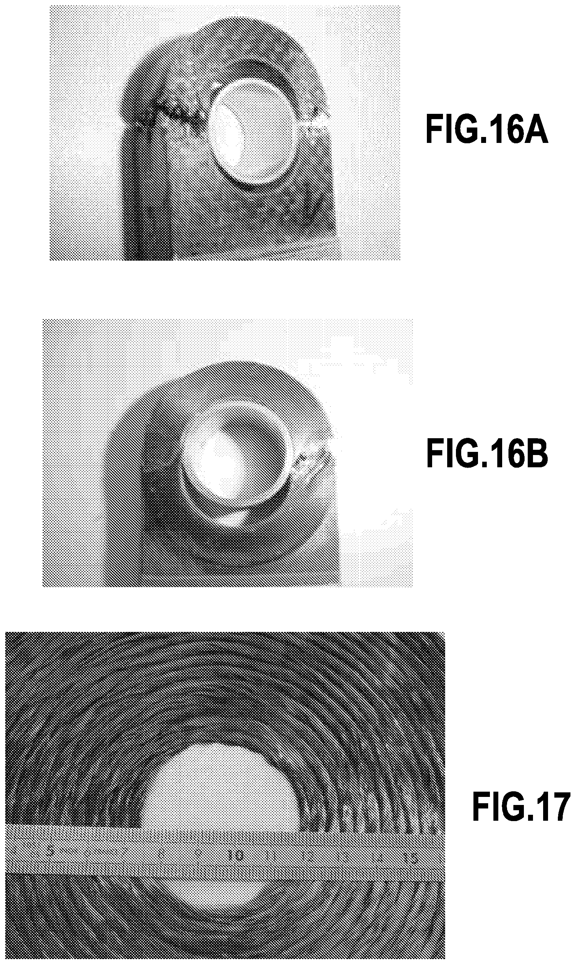

De même, une spirale telle que représentée sur la représentation schématique de la **Figure 4** et présentée partiellement sur la photographie de la **Figure 17****,** de diamètre **Di** interne de 40 mm et de diamètre externe **De** est réalisée par dépose de fil de carbone 24K de 1040 tex (T800S de la société Toray) torsadé avec une torsion de 22 t/m. Le pas **p** de dépose entre 2 trajectoires moyennes consécutives est de 3,88 mm. Le fil est déposé selon une spirale sur un film de résine époxy (Hexply M21, de la société Hexcel) de densité surfacique égale à 72 g/m². La préforme obtenue présente une épaisseur moyenne de 0,25 mm.

### Exemple 2 de réalisation d'un pli de « nappe de fils torsadés »

En utilisant un dispositif analogue au précédent, permettant la dépose simultanée de 23 fils, un pli de « nappe de fils torsadés » destinée à renforcer un coin de porte, tel qu'illustré sur la représentation schématique de la **Figure 3**, est réalisé : sur un angle de 90°, un arc de cercle de diamètre interne égal à 95 mm et de diamètre externe égale à 475 mm est réalisé par dépose de fils de carbone de 12K et de 446 tex (IM7-6000 de Hexcel) torsadés avec une torsion de 17 t/m. Le pas de dépose, espace entre les fibres médianes de deux fils consécutifs, est de 1,65 mm. La dépose est réalisée sur un film de résine époxy (Hexply 8552, de la société Hexcel) de densité surfacique égale à 72 g/m².

Le pli obtenu présente une épaisseur moyenne de 0,25 mm.

### Exemple 3 de réalisation d'une pièce de type chape de bielle

Une pièce est réalisée conformément au procédé de l'invention et ses propriétés mécaniques sont comparées à trois autres pièces obtenues selon d'autres procédés.

### a) chape de bielle fabriquée selon le procédé de l'invention

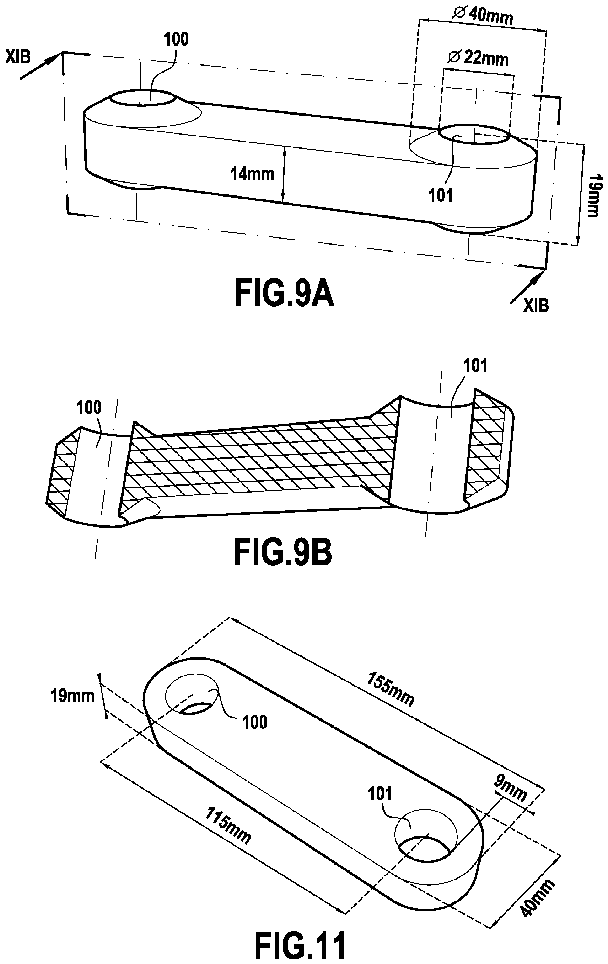

Une pièce conforme à la pièce présentée **Figure 9A et 9B** est réalisée par drapage de plis de nappe unidirectionnelle et de plis de « nappe de fils torsadés » réalisés conformément à l'exemple 1 au niveau des deux ouvertures **100** et **101**, de manière à obtenir une orientation des fibres de 50 / 40 / 10.

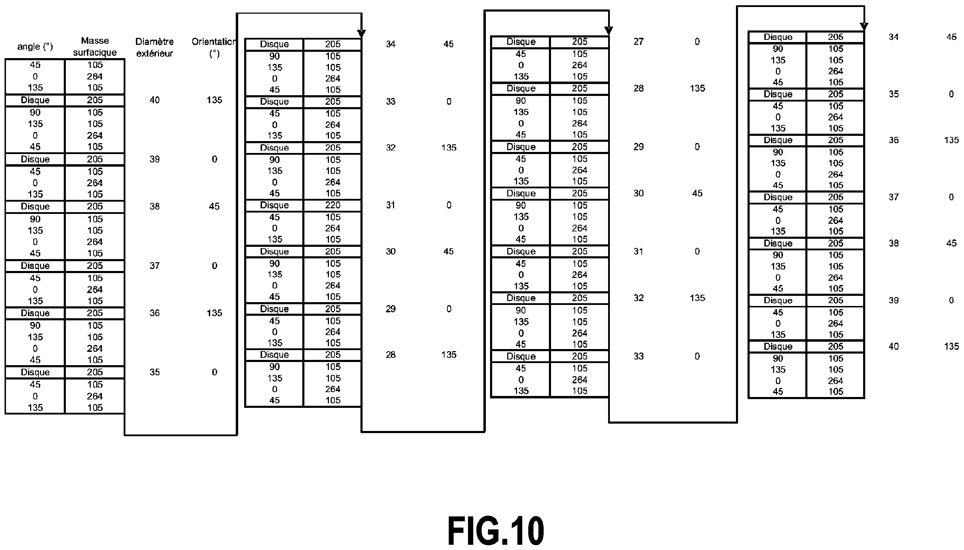

27 plis de nappes torsadées sont utilisés : ces plis sont réalisés par dépôt d'une spirale de 205 g/m² de fils de carbone HTA 5131 3K de diamètre interne de 22 mm et de diamètres externes évolutifs comme présenté **Figure 10**, sur un papier silicone poudré à 10 g/m² avec une résine époxy contenant un durcisseur (E01, de la société Hexcel). Le dépôt est alors recouvert d'un autre papier siliconé identique. Les deux papiers sont, bien entendu, retirés avant drapage.

Les nappes unidirectionnelles utilisée sont constituées à partir de fils de carbone HTA 5131 6K, et ont une masse surfacique de 264g/m² ou de 105gm². Sur une face de la nappe un fil thermocollant de la famille des polyesters s'étendant transversalement aux fils de carbone, est déposé avec un pas d'espacement de 50 mm. Chacune des faces de l'ensemble nappe de fils de carbone, fils thermocollant est recouvert d'une poudre de résine epoxy E01 (Hexcel), à raison de 2 fois 10g/m².

Ces nappes unidirectionnelles sont empilées selon une séquence **A** correspondant à 1053g/m2 présentée dans le **TABLEAU 1** ci-après.

**TABLEAU 1**

| Angle | g/m² | | |
|---|---|---|---|
| 45 | 105 | 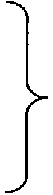 | |
| 0 | 264 | | |
| 135 | 105 | | A |
| 90 | 105 | | |
| 135 | 105 | | |
| 0 | 264 | | |
| 45 | 105 | | |

14 séquences A et 27 plis de « nappe de fils torsadés » sont empilées pour la réalisation de la pièce composite. Les plis de « nappe de fils torsadés » sont insérés au sein des séquences A comme présenté **Figure 10** qui montre l'empilement de plis réalisé.

### b) exemple comparatif C1

Une pièce conforme à la pièce présentée **Figure 11** est réalisée par drapage de plis de tissus, de manière à obtenir une orientation des fibres de 50 / 40 / 10.

Les plis de tissus utilisés sont les suivants :
▪ Tissu B (Taffetas 205g/m² de fils de carbone en chaîne et en trame 3K HR poudré avec Hexcel E01 10 g/m²)
▪ Tissu C (Taffetas Unidirectionnel 290g/m² 6K de fils de carbone HR en chaine, Verre E 34Tex en trame, poudré avec Hexcel E01 2x10g/m²)

Le **TABLEAU 2** ci-après présente les différents plis utilisés.

**TABLEAU 2**

| | | Masse totale g/m² | % |
|---|---|---|---|
| 0° | 28 plis de G1157 + 19 demi-plis de GB201 | 10067,5 | 49,8 |
| 45°/135° | 40 plis de GB201 | 8200 | 40,6 |
| 90° | 19 demi-plis de GB201 | 1947,5 | 9,6 |

Le **TABLEAU 3** ci-après présente les étapes d'empilement mises en oeuvre pour la réalisation de la pièce.

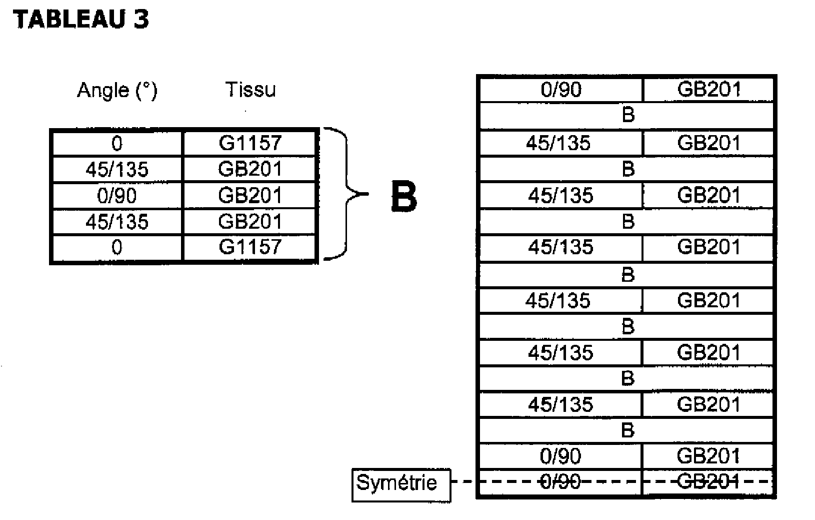

### c) exemple comparatif C2

Une pièce conforme à la pièce présentée **Figure 11** est réalisée par drapage de plis de nappe unidirectionnelle par empilement de 19 séquences A telles que décrites à l'exemple 3 a), de manière à obtenir une orientation des fibres de 50 / 40 / 10.

### d) exemple comparatif C3

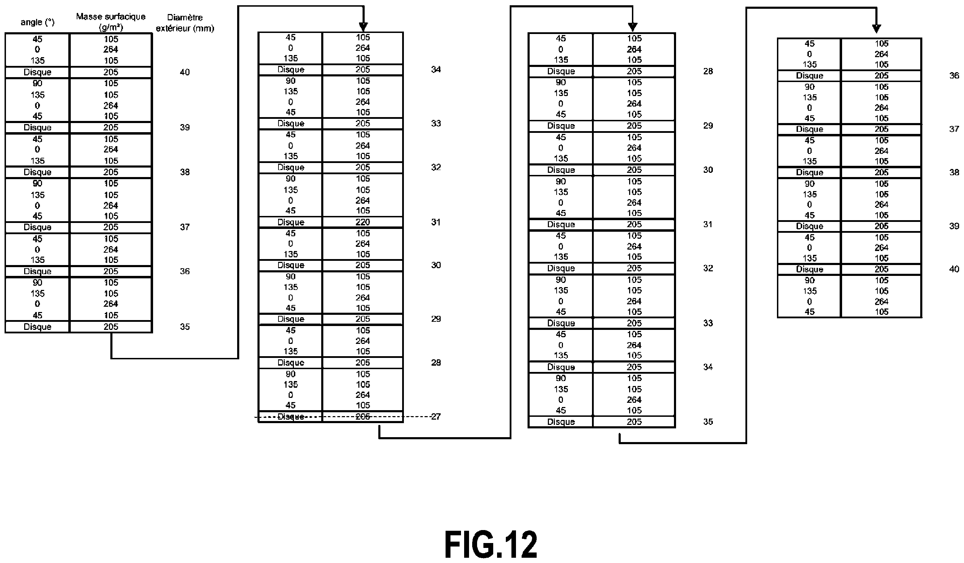

Une pièce conforme à la pièce présentée **Figure 9A** et **9B** est réalisée conformément à l'exemple 3 a), de manière à obtenir une orientation des fibres de 50 / 40 / 10, en remplaçant les plis de « nappe de fils torsadés » au niveau des deux ouvertures **100** et **101** par des disques de diamètre interne de 22 mm et de diamètres externes évolutifs comme présenté **Figure 12**, découpés dans une nappe tissée de 205g/m² Tissu B (Taffetas 205g/m² 3K HR) E01 2x10g/m².

L'orientation des disques, l'évolution de leur diamètre externe, ainsi que les empilements réalisés sont présentés **Figure 12**.

Pour chacun des exemples ci-dessus, les étapes d'empilement sont réalisées dans un moule en deux parties, de forme adaptée à la pièce à réaliser et la pièce finale est ensuite obtenue selon un procédé RTM en appliquant les étapes successives suivantes :
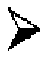 **Avant l'injection** :
   ▪ Branchement d'une pompe à vide à l'une des extrémités du moule pour vérifier le compactage de la préforme afin d'appréhender les chemins préférentiels de résine.
   ▪ Montée en température sous presse : 5°C/min
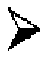 **Injection**
   ▪ L'injection se fait par l'intermédiaire de bouchon présent sur le moule, avec une résine Hexcel RTM6
   ▪ Pression d'entrée : 2,5 bar
   ▪ Vide en sortie : 5 mbar
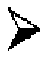 **Cuisson**
   ▪
   ▪ Cuisson : 2h00 à 180°C
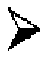 **Refroidissement avant démoulage** :
   ▪ Pente de refroidissement : 5°C/min

Les pièces finales obtenues présentent les caractéristiques suivantes présentées **TABLEAU 4.**

**TABLEAU 4**

| Pièce | Masse | Variation de masse | Taux volumiques de fibres |
|---|---|---|---|
| Chape de bielle fabriquée selon le procédé de l'invention | 154 g | - 15% | 61 % |
| Exemple comparatif C1 | 182 g | référence | 61 % |
| Exemple comparatif C2 | 183 g | +1% | 61 % |
| Exemple comparatif C3 | 154 | -15% | 61 % |

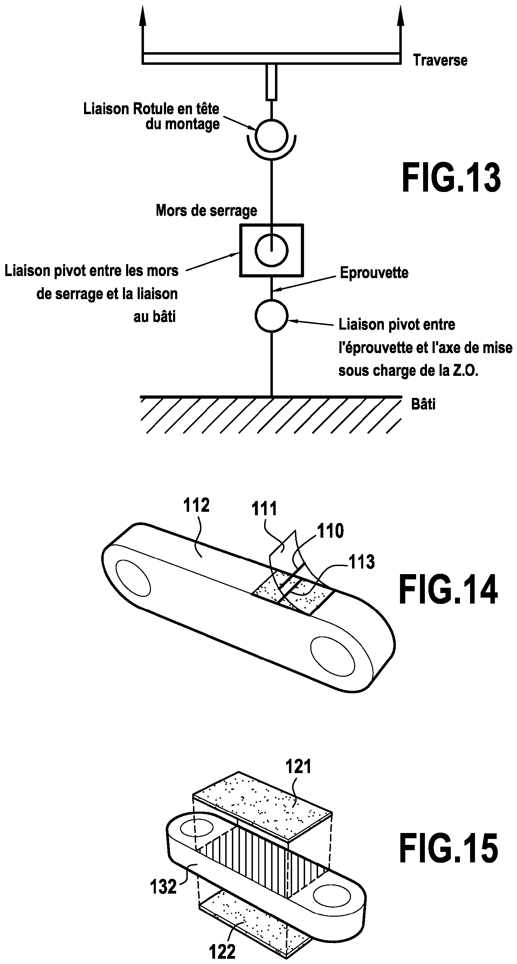

Des tests mécaniques sont réalisés sur chacune des pièces en positionnant la pièce entre deux Mors de serrage reliés par des vis permettant le serrage de la pièce entre les deux mors. Une charge de traction est appliquée sur la pièce en utilisant un dispositif tel qu'illustré **Figure 13**. Une jauge de repérage **110**, portée par un ruban adhésif indéformable **111**, est positionnée sur un bord latéral **112** de la pièce, au moyen d'une colle, de manière à coïncider avec un repère **113** directement porté sur la pièce, comme illustré **Figure 14**. Le ruban adhésif est ensuite oté, la jauge restant alors collée sur la pièce. Des talons de verre **121** et **122** sont ensuite collés de part est d'autres de la pièce sur sa partie centrale **123**, comme illustré **Figure 15****.** Ces talons servent à maintenir encastrée la partie centrale de la pièce, ils sont en verre, référence Hexcel 914/644. La colle est la Structil Hysol® EA 9321. La polymérisation de la colle est effectuée à température ambiante pendant 10 jours.

Les essais sont réalisés de la façon suivante :
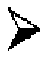 **Conditions d'essais**
   ▪ Dartec 30 T Capteur 10 T
   ▪ Matériel d'acquisition des déformations HBM Spider 8
   ▪ Jauges Vishay 062UW 350
   ▪ Vitesse d'avance de la traverse : 0,016 mm / s soit 0,96 mm/min
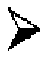 **Procédure**
   ▪ Mise en place de la pièce dans les mors de serrage. Serrage des 6 vis au couple de 10 DaN/Vis
   ▪ Mise en place des « mors + pièce » dans la chape
   ▪ Positionnement de la traverse de la Dartec pour permettre la mise en place de l'axe Titane reliant la Z.O. et la chape de visualisation
   ▪ Mise à Zéro des déformations des jauges
   ▪ Lancement de l'essai en traction

Les résultats mécaniques obtenus sont présentés dans le **TABLEAU 5** ci après.

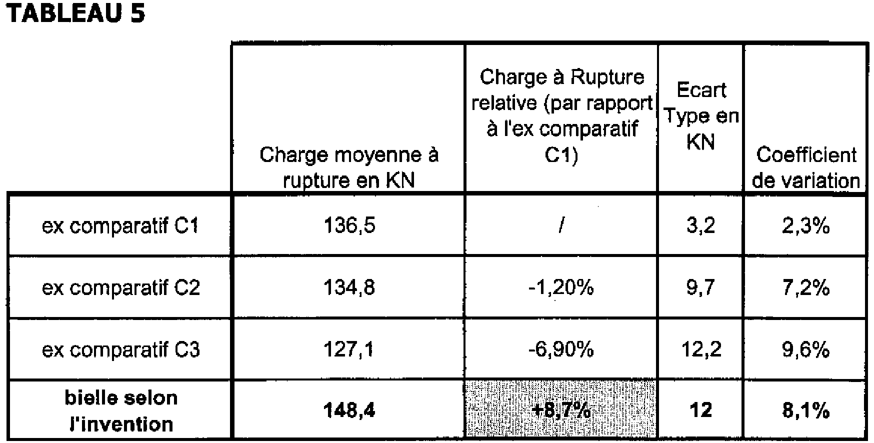

Les **Figures 16A** et **16B** présentent respectivement des photos des pièces selon l'exemple comparatif C1 et selon l'invention, après l'essai en traction.

Les propriétés mécaniques des fils tordus ont été vérifiées indépendamment des essais précités. Les essais ont été réalisés selon les tests standards décrits dans le **TABLEAU 6**, avec des éprouvettes réalisées à base de préimprégnés unidirectionnels de fils de carbone Hexcel IMA GS 12K, lot n° 3733-6G, à 268g/m², imprégnés avec une résine: Hexcel M21E, lot n° 71087-71088. Les nappes préimprégnées utilisées pour effectuer les plaques testées ont été réalisées avec des fils non tordus et tordus à 17t/m selon le mode de l'invention.

Ces nappes ont été empilées puis cuites selon les recommandations décrites dans les normes citées.

Le lot 1 correspond à l'utilisation de fils non tordus.

Le lot 2 correspond à l'utilisation de fils tordus à 17 tours/mètre.

Le **TABLEAU 6** présente les tests réalisés et les résultats obtenus.

**TABLEAU 6**

| Test | T/conditions | Lot | Moyenne | E.Type % |
|---|---|---|---|---|
| | | | | |
| Résistance à la traction [MPa] [0]8, EN 2561 A | TA/sec | 1 | **100** | 7,4 |
| | TA/sec | 2 | **113** | 2,8 |
| Module en traction [GPa] [0]8, EN 2561 A | TA/sec | 1 | **100** | 1,2 |
| | TA/sec | 2 | **102** | 1,4 |
| | | | | |
| Résistance en compression [MPa] [0]8, EN 2850 B | TA/sec | 1 | **100** | 19,2 |
| | TA/sec | 2 | **104** | 9,0 |
| Module en Compression [GPa] [0]8, EN 2850 B | TA/sec | 1 | **100** | 2,7 |
| | TA/sec | 2 | **94** | 1,7 |
| | | | | |
| Résistance ILSS [MPa] [0]8, EN 2563 | TA/sec | 1 | **100** | 4,2 |
| | TA/sec | 2 | **113** | 5,2 |
| | 120°C/sec | 1 | **100** | 1,1 |
| | 120°C/sec | 2 | **108** | 3,2 |

Les valeurs présentées sont normalisées à des taux volumiques de fibres de 60% et normalisées par rapport aux valeurs obtenues dans le cas des fils non torsadés.

Aucune chute significative des propriétés mécaniques n'est observée en tordant les fils à 17t/m.

## Revendications

1. Procédé de fabrication d'une pièce composite (I) composée d'un ensemble de nappes de fils de renfort superposées inclues, en partie au moins, dans une matrice polymérique, ladite pièce présentant au moins une zone courbe (5), dans lequel sont mises en oeuvre des étapes de drapage ou d'empilement de pli procédé dans lequel, dans au moins une région adjacente à une zone courbe, au moins une étape d'empilement ou de drapage est réalisée avec un pli en matériau composite, comprenant une nappe, nommée nappe de fils torsadés (2), composée d'au moins un fil de renfort torsadé de façon à au moins compenser les différences de longueur que présentent les trajectoires extrêmes du fil de part et d'autre de sa largeur mesurée parallèlement à la surface de la nappe, la nappe de fils torsadés étant réalisée :
- soit avec au moins un fil de carbone de 3K et de 200 tex présentant une torsion de 10 à 70t/m, préférentiellement de 15 à 40t/m, lorsque le rayon interne minimal de la trajectoire du fil est compris dans la gamme allant de 10 à 500 mm,
- soit avec au moins un fil de carbone de 6K et de 223 tex présentant une torsion de 15 à 80t/m, préférentiellement de 50 à 70t/m, lorsque le rayon interne minimal de la trajectoire du fil est compris dans la gamme allant de 10 à 500 mm,
- soit avec au moins un fil de carbone de 6K et de 400 tex présentant une torsion de 15 à 80t/m, préférentiellement de 40 à 60t/m, lorsque le rayon interne minimal de la trajectoire du fil est compris dans la gamme allant de 10 à 500 mm,
- soit avec au moins un fil de carbone de 12K et de 446 tex présentant une torsion de 10 à 80t/m, préférentiellement de 10 à 60t/m est déposé, lorsque le rayon interne minimal de la trajectoire du fil est compris dans la gamme allant de 10 à 500 mm,
- soit avec au moins un fil de carbone de 24K et de 1040 tex présentant une torsion de 10 à 40 t/m, préférentiellement de 10 à 25 t/m, lorsque le rayon interne minimal de la trajectoire du fil est compris dans la gamme allant de 20 à 150 mm.

2. Procédé selon la revendication 1 **caractérisé en ce que** la zone courbe (5) correspond à un bord courbe de la pièce et **en ce que** les fils de renfort torsadés de la nappe de fils torsadés s'étendent selon une trajectoire sensiblement parallèle au bord courbe.

3. Procédé selon la revendication 2 **caractérisé en ce que** le bord courbe délimite une ouverture.

4. Procédé selon l'une des revendications 1 à 3 **caractérisé en ce que**, la nappe de fils torsadés (2) est composée d'un seul fil présentant une torsion sensiblement identique sur toute sa longueur ou d'une série de fils torsadés individuellement et présentant, entre eux et sur toute leur longueur, une torsion sensiblement identique.

5. Procédé selon l'une des revendications 1 à 4 **caractérisé en ce que** le ou les plis sont composés d'au moins un fil de renfort constituant une nappe, le caractère cohérent de chaque pli étant assuré par un liant polymérique choisi parmi les polymères thermodurcissables, les polymères thermoplastiques et les mélanges desdits polymères, éventuellement sous la forme de poudre, de résine auto-adhésive ou hot-melt ou de voile.

6. Procédé selon l'une des revendications 1 à 5 **caractérisé en ce que**, l'ensemble des plis comprend un pourcentage en masse de liant polymérique par rapport à la masse totale des plis, c'est à dire fils de renfort plus liant polymérique, est compris dans la gamme allant de 0,1 à 25 %, et avantageusement de 3 à 10 % ou dans la gamme allant de 20 à 60 %, et avantageusement de 30 à 40 %.

7. Procédé selon l'une des revendications 1 à 6 **caractérisé en ce que** la nappe de fils torsadés (2) est composée d'un seul fil torsadé déposé bord à bord selon des trajectoires sensiblement parallèles les unes aux autres ou d'une série de fils torsadés s'étendant sensiblement parallèlement les uns aux autres et de façon jointive.

8. Procédé selon l'une des revendications 1 à 7 **caractérisé en ce que** la nappe de fils torsadés (2) est composée d'une spirale de fils torsadés, chaque spire étant jointive avec la suivante.

9. Procédé selon l'une des revendications 1 à 8 **caractérisé en ce qu'**il comprend des étapes d'empilement ou de drapage de plis de nappes unidirectionnelles, de multiaxiaux ou de tissus.

10. Procédé selon la revendication 9 **caractérisé en ce que** les étapes d'empilement ou de drapage de plis de nappes unidirectionnelles, de multiaxiaux ou de tissus sont réalisées en orientant les fils des nappes, de manière à obtenir des pourcentages massiques de fibres au sein de la pièce composite, orientées dans les directions faisant un angle de 0°, 45° et 135°, avec isoproportion de 45 et 135°, et 90° avec l'axe principal de la pièce, de 25/50/25, 40/40/20, 50/40/10 ou 10/80/10.

11. Pièce en matériau composite (I) composée d'un ensemble de nappes de fils de renfort superposées inclues, en partie au moins, dans une matrice polymérique, ladite pièce présentant au moins une zone courbe, dans laquelle au moins une région adjacente à une zone courbe (5), comporte une nappe, nommée nappe de fils torsadés (2), composée d'au moins un fil de renfort torsadé de façon à au moins compenser les différences de longueur que présentent les trajectoires extrêmes du fil de part et d'autre de sa largeur mesurée parallèlement à la surface de la nappe, la nappe de fils torsadés étant constituée :
- soit d'un fil ou d'une série de fils de carbone de 3K et de 200 tex présentant une torsion de 10 à 70t/m, préférentiellement de 15 à 40t/m, lorsque le rayon interne minimal de la trajectoire du fil est compris dans la gamme allant de 10 à 500 mm,
- soit d'un fil ou d'une série de fils de carbone de 6K et de 223 tex présentant une torsion de 15 à 80t/m, préférentiellement de 50 à 70t/m, lorsque le rayon interne minimal de la trajectoire du fil est compris dans la gamme allant de 10 à 500 mm,
- soit d'un fil ou d'une série de fils de carbone de 6K et de 400 tex présentant une torsion de 15 à 80t/m, préférentiellement de 40 à 60t/m, lorsque le rayon interne minimal de la trajectoire du fil est compris dans la gamme allant de 10 à 500 mm,
- soit d'un fil ou d'une série de fils de carbone de 12K et de 446 tex présentant une torsion de 10 à 80t/m, préférentiellement de 10 à 60t/m est déposé, lorsque le rayon interne minimal de la trajectoire du fil est compris dans la gamme allant de 10 à 500 mm,
- soit d'un fil ou d'une série de fils de carbone de de 24K et de 1040 tex présentant une torsion de 10 à 40 t/m, préférentiellement de 10 à 25 t/m, lorsque le rayon interne minimal de la trajectoire du fil est compris dans la gamme allant de 20 à 150 mm.

12. Pièce selon la revendication 11 **caractérisée en ce que** la zone courbe (5) correspond à un bord courbe de la pièce et **en ce que** les fils de renfort torsadés de la nappe de fils torsadés s'étendent selon une trajectoire sensiblement parallèle au bord courbe.

13. Pièce selon la revendication 12 **caractérisée en ce que** le bord courbe délimite une ouverture.

14. Pièce selon l'une des revendications 11 à 13 **caractérisée en ce que** la nappe de fils torsadés (2) est composée d'un seul fil présentant une torsion sensiblement identique sur toute sa longueur ou d'une série de fils torsadés individuellement et présentant, entre eux et sur toute leur longueur, une torsion sensiblement identique.

15. Pièce selon l'une des revendications 11 à 14 **caractérisée en ce que** la matrice polymérique est choisie parmi les polymères thermodurs, les polymères thermoplastiques et les mélanges desdits polymères.

16. Pièce selon l'une des revendications 11 à 15 **caractérisée en ce que**, le pourcentage en masse de matrice polymérique par rapport à la masse totale de la pièce est compris dans la gamme allant de 20 à 60 %, et avantageusement de 30 à 40 %.

17. Pièce selon l'une des revendications 11 à 16 **caractérisée en ce que** la nappe de fils torsadés (2) est composée d'un seul fil torsadé déposé bord à bord selon des trajectoires sensiblement parallèles les unes aux autres ou d'une série de fils torsadés s'étendant sensiblement parallèlement les uns aux autres et de façon jointive.

18. Pièce selon l'une des revendications 11 à 17 **caractérisée en ce que** la nappe de fils torsadés (2) est composée d'une spirale de fils torsadés, chaque spire étant jointive avec la suivante.

19. Pièce selon l'une des revendications 11 à 18 **caractérisée en ce qu'**au moins une partie des nappes constitutives de la pièce sont des nappes unidirectionnelles, de multiaxiaux ou de tissus.

20. Pièce selon la revendication 19 **caractérisée en ce que** les orientations des nappes unidirectionnelles, de multiaxiaux ou de tissus sont choisies, de manière à obtenir des pourcentages massiques de fibres au sein de la pièce composite, orientées dans les directions faisant un angle de 0°, 45° et 135°, avec isoproportion de 45 et 135°, et 90° avec l'axe principal de la pièce, respectivement de 25/50/25, 40/40/20, 50/40/10 ou 10/80/10.

21. Pièce selon l'une des revendications 11 à 20 se présentant sous la forme d'une chape de bielle ou attache de bielle.

22. Pièce selon l'une des revendications 11 à 20 se présentant sous la forme d'un élément de renfort d'encadrement pour coin de porte, trappe d'accès, trou d'homme ou trappe de visite, d'un encadrement de hublot ou de pare-brise, d'un alésage pour assemblage, d'une pièce d'attache ou d'une pièce comportant une zone d'introduction de charge, telle qu'une zone de fixation.

## Patentansprüche

1. Verfahren zur Herstellung eines Verbundstoffteils (I), das aus einem Satz übereinanderliegender Lagen von Verstärkungsgarnen besteht, die zumindest teilweise in einer Polymermatrix enthalten sind, wobei das Teil mindestens einen gebogenen Bereich (5) aufweist, wobei Schritte des Drapierens oder Stapelns von Falten durchgeführt werden,
wobei bei dem Verfahren in mindestens einem Bereich, der an einen gebogenen Bereich angrenzt, mindestens ein Schritt des Stapelns oder Drapierens mit einer Falte aus Verbundmaterial durchgeführt wird, umfassend eine Lage, die als Lage von verdrehten Garnen (2) bezeichnet wird und aus mindestens einem verdrehten Verstärkungsgarn besteht, um mindestens die Längenunterschiede auszugleichen, die die äußersten Garnwege auf beiden Seiten seiner parallel zur Oberfläche der Lage gemessenen Breite aufweisen, wobei die Lage von verdrehten Garnen ausgeführt wird:
- entweder mit mindestens einem Kohlenstoffgarn von 3K und 200 tex mit einer Drehung von 10 bis 70 T/m, vorzugsweise 15 bis 40 T/m, wenn der minimale Innenradius des Garnwegs im Bereich von 10 bis 500 mm liegt,
- oder mit mindestens einem Kohlenstoffgarn von 6K und 223 tex mit einer Drehung von 15 bis 80 T/m, vorzugsweise 50 bis 70 T/m, wenn der minimale Innenradius des Garnwegs im Bereich von 10 bis 500 mm liegt,
- oder mit mindestens einem Kohlenstoffgarn von 6K und 400 tex mit einer Drehung von 15 bis 80 T/m, vorzugsweise 40 bis 60 T/m, wenn der minimale Innenradius des Garnwegs im Bereich von 10 bis 500 mm liegt,
- oder mit mindestens einem Kohlenstoffgarn von 12K und 446 tex mit einer Drehung von 10 bis 80 T/m, vorzugsweise 10 bis 60 T/m, wenn der minimale Innenradius des Garnwegs im Bereich von 10 bis 500 mm liegt,
- oder mit mindestens einem Kohlenstoffgarn von 24K und 1040 tex mit einer Drehung von 10 bis 40 T/m, vorzugsweise 10 bis 25 T/m, wenn der minimale Innenradius des Garnwegs im Bereich von 20 bis 150 mm liegt.

2. Verfahren nach Anspruch 1, **dadurch gekennzeichnet, dass** der gebogene Bereich (5) einer gebogenen Kante des Teils entspricht und dass sich die verdrehten Verstärkungsgarne der Lage von verdrehten Garnen entlang eines Weges erstrecken, der im Wesentlichen parallel zu der gebogenen Kante verläuft.

3. Verfahren nach Anspruch 2, **dadurch gekennzeichnet, dass** die gebogene Kante eine Öffnung begrenzt.

4. Verfahren nach einem der Ansprüche 1 bis 3, **dadurch gekennzeichnet, dass** die Lage von verdrehten Garnen (2) aus einem einzigen Garn mit einer im Wesentlichen identischen Drehung über seine gesamte Länge oder einer Reihe von einzeln verdrehten Garnen besteht, die untereinander und über ihre gesamte Länge eine im Wesentlichen gleiche Drehung aufweisen.

5. Verfahren nach einem der Ansprüche 1 bis 4, **dadurch gekennzeichnet, dass** die Falte(n) aus mindestens einem eine Lage bildenden Verstärkungsgarn besteht (bestehen), wobei der kohärente Charakter jeder Falte durch ein polymeres Bindemittel gewährleistet wird, das ausgewählt ist aus wärmehärtbaren Polymeren, thermoplastischen Polymeren und Mischungen dieser Polymere, gegebenenfalls in Form von Pulver, selbstklebendem oder heißschmelzendem Harz oder einer Bahn.

6. Verfahren nach einem der Ansprüche 1 bis 5, **dadurch gekennzeichnet, dass** alle Falten einen Gewichtsprozentsatz an polymerem Bindemittel, bezogen auf das Gesamtgewicht der Falten, d. h. Verstärkungsgarne plus polymeres Bindemittel, im Bereich von 0,1 bis 25 % und vorzugsweise von 3 bis 10 % oder im Bereich von 20 bis 60 %, und vorzugsweise von 30 bis 40 % umfassen.

7. Verfahren nach einem der Ansprüche 1 bis 6, **dadurch gekennzeichnet, dass** die Lage von verdrehten Garnen (2) aus einem einzigen verdrehten Garn besteht, das auf im Wesentlichen parallelen Wegen von Kante zu Kante gelegt ist, oder aus einer Reihe von verdrehten Garnen, die sich im Wesentlichen parallel zueinander und in aneinanderstoßender Weise erstrecken.

8. Verfahren nach einem der Ansprüche 1 bis 7, **dadurch gekennzeichnet, dass** die Lage von verdrehten Garnen (2) aus einer Spirale von verdrehten Garnen besteht, wobei jede Windung an die nächste anstößt.

9. Verfahren nach einem der Ansprüche 1 bis 8, **dadurch gekennzeichnet, dass** es die Schritte des Stapelns oder Drapierens von Falten aus unidirektionalen Lagen, multiaxialen Lagen oder Gewebelagen umfasst.

10. Verfahren nach Anspruch 9, **dadurch gekennzeichnet, dass** die Schritte des Stapelns oder Drapierens von Falten aus unidirektionalen Lagen, multiaxialen Lagen oder Gewebelagen dadurch durchgeführt werden, dass die Garne der Lagen so ausgerichtet werden, dass innerhalb des Verbundstoffteils Massenprozentsätze von Fasern, die in den Richtungen mit einem Winkel von 0°, 45° und 135°, mit einer Isoproportion von 45° und 135°, und 90° mit der Hauptachse des Teils ausgerichtet sind, von 25/50/25, 40/40/20, 50/40/10 oder 10/80/10 erhalten werden.

11. Verbundstoffteil (I), das aus einem Satz übereinanderliegender Lagen von Verstärkungsgarnen besteht, die zumindest teilweise in einer Polymermatrix enthalten sind, wobei das Teil mindestens einen gebogenen Bereich aufweist, in dem mindestens ein Bereich, der an einen gebogenen Bereich (5) angrenzt, eine Lage umfasst, die als Lage von verdrehten Garnen (2) bezeichnet wird und aus mindestens einem verdrehten Verstärkungsgarn besteht, um mindestens die Längenunterschiede auszugleichen, die die äußersten Garnwege auf beiden Seiten seiner parallel zur Oberfläche der Lage gemessenen Breite aufweisen, wobei die Lage von verdrehten Garnen gebildet wird aus:
- entweder einem oder einer Reihe von Kohlenstoffgarn(en) von 3K und 200 tex mit einer Drehung von 10 bis 70 T/m, vorzugsweise 15 bis 40 T/m, wenn der minimale Innenradius des Garnwegs im Bereich von 10 bis 500 mm liegt,
- oder einem oder einer Reihe von Kohlenstoffgarn(en) von 6K und 223 tex mit einer Drehung von 15 bis 80 T/m, vorzugsweise 50 bis 70 T/m, wenn der minimale Innenradius des Garnwegs im Bereich von 10 bis 500 mm liegt,
- oder einem oder einer Reihe von Kohlenstoffgarn(en) von 6K und 400 tex mit einer Drehung von 15 bis 80 T/m, vorzugsweise 40 bis 60 T/m, wenn der minimale Innenradius des Garnwegs im Bereich von 10 bis 500 mm liegt,
- oder einem oder einer Reihe von Kohlenstoffgarn(en) von 12K und 446 tex mit einer Drehung von 10 bis 80 T/m, vorzugsweise 10 bis 60 T/m, wenn der minimale Innenradius des Garnwegs im Bereich von 10 bis 500 mm liegt,
- oder einem oder einer Reihe von Kohlenstoffgarn(en) von 24K und 1040 tex mit einer Drehung von 10 bis 40 T/m, vorzugsweise 10 bis 25 T/m, wenn der minimale Innenradius des Garnwegs im Bereich von 20 bis 150 mm.

12. Teil nach Anspruch 11, **dadurch gekennzeichnet, dass** der gebogene Bereich einer gebogenen Kante des Teils entspricht und dass sich die verdrehten Verstärkungsgarne der Lage von verdrehten Garnen entlang eines Weges erstrecken, der im Wesentlichen parallel zu der gebogenen Kante verläuft.

13. Teil nach Anspruch 12, **dadurch gekennzeichnet, dass** die gebogene Kante eine Öffnung begrenzt.

14. Teil nach einem der Ansprüche 11 bis 13, **dadurch gekennzeichnet, dass** die Lage von verdrehten Garnen (2) aus einem einzigen Garn mit einer im Wesentlichen identischen Drehung über seine gesamte Länge oder einer Reihe von einzeln verdrehten Garnen besteht, die untereinander und über ihre gesamte Länge eine im Wesentlichen gleiche Drehung aufweisen.

15. Teil nach einem der Ansprüche 11 bis 14, **dadurch gekennzeichnet, dass** die Polymermatrix ausgewählt ist aus wärmehärtbaren Polymeren, thermoplastischen Polymeren und Mischungen dieser Polymere.

16. Teil nach einem der Ansprüche 11 bis 15, **dadurch gekennzeichnet, dass** der Gewichtsprozentsatz der Polymermatrix bezogen auf das Gesamtgewicht des Teils im Bereich von 20 bis 60 % und vorzugsweise von 30 bis 40 % liegt.

17. Teil nach einem der Ansprüche 11 bis 16, **dadurch gekennzeichnet, dass** die Lage von verdrehten Garnen (2) aus einem einzigen verdrehten Garn besteht, das auf im Wesentlichen parallelen Wegen von Kante zu Kante gelegt ist, oder aus einer Reihe von verdrehten Garnen, die sich im Wesentlichen parallel zueinander und in aneinanderstoßender Weise erstrecken.

18. Teil nach einem der Ansprüche 11 bis 17, **dadurch gekennzeichnet, dass** die Lage von verdrehten Garnen (2) aus einer Spirale von verdrehten Garnen besteht, wobei jede Windung an die nächste anstößt.

19. Teil nach einem der Ansprüche 11 bis 18, **dadurch gekennzeichnet, dass** die das Teil bildenden Lagen zumindest teilweise unidirektionale Lagen, multiaxiale Lagen oder Gewebelagen sind.

20. Teil nach Anspruch 19, **dadurch gekennzeichnet, dass** die Ausrichtungen der unidirektionalen Lagen, multiaxialen Lagen oder Gewebelagen so gewählt sind, dass innerhalb des Verbundstoffteils Massenprozentsätze von Fasern, die in den Richtungen mit einem Winkel von 0°, 45° und 135°, mit einer Isoproportion von 45° und 135°, und 90° mit der Hauptachse des Teils ausgerichtet sind, von 25/50/25, 40/40/20, 50/40/10 oder 10/80/10 erhalten werden.

21. Teil nach einem der Ansprüche 11 bis 20 in Form eines Pleuelkopfes oder einer Pleuelstangenbefestigung.

22. Teil nach einem der Ansprüche 11 bis 20 in Form eines Rahmenverstärkungselements für eine Türecke, eine Zugangsklappe, ein Mannloch oder eine Inspektionsklappe, eines Fenster- oder Windschutzscheibenrahmens, einer Montagebohrung, eines Befestigungsteils oder eines Teils mit einem Ladeeinleitbereich, wie beispielsweise einem Befestigungsbereich.

## Claims

1. Fabrication process for a composite part (I) composed of a group of superimposed webs of reinforcement threads included at least partially in a polymer matrix, said part having at least one curved area (5), in which are implemented steps of ply draping or stacking,
process in which in at least one region adjacent to a curved area, at least one stacking or draping step is carried out with a ply of composite material, comprising a web, called a web of twisted threads (2), composed of at least one reinforcement thread twisted so as to at least compensate for the length differences that the extreme paths of the thread have on one side and the other of its width measured parallel to the surface of the web, the web of twisted threads (2) being obtained with:
- either with at least one 3K carbon thread of 200 tex having a twist of 10 to 70t/m, preferably from 15 to 40t/m, when the minimal internal radius of the thread path falls within the range going from 10 to 500 mm,
- or at least one 6K carbon thread of 223 tex with a twist of 15 to 80t/m, preferably from 50 to 70t/m, when the minimal internal radius of the thread path falls within the range of 10 to 500 mm,
- or at least one 6K carbon thread of 400 tex with a twist of 15 to 80t/m, preferably from 40 to 60t/m, when the minimal internal radius of the thread path falls within the range of 10 to 500 mm,
- or at least one 12K carbon thread of 446 tex with a twist of 10 to 80t/m, preferably from 10 to 60t/m, when the minimal internal radius of the thread path falls within the range of 10 to 500 mm,
- or at least one 24K carbon thread of 1040 tex with a twist of 10 to 40t/m, preferably from 10 to 25t/m, when the minimal internal radius of the thread path falls within the range of 20 to 150 mm.

2. Process according to Claim 1, **characterized in that** the curved area (5) is a curved edge of the part and **in that** the twisted threads in the web of twisted threads extend in a path essentially parallel to the curved edge.

3. Process according to Claim 2, **characterized in that** the curved edge defines an opening.

4. Process according to one of the claims 1 to 3, **characterized in that** the web of twisted threads (2) is composed of a single thread with an essentially identical twist along its entire length or of a group of individually twisted threads and having, among them and along their entire length, an essentially identical twist.

5. Process according to one of the claims 1 to 4, **characterized in that** the ply or plies are composed of at least one reinforcement thread forming a web, the consistency of each ply being obtained by a polymeric binder selected from among thermosetting polymers, thermoplastic polymers and mixtures of said polymers, possibly in the form of powder, self-adhesive resin or hot-melt or veil.

6. Process according to one of the claims 1 to 5, **characterized in that** the group of plies contain a percentage by weight of polymeric binder relative to the total weight of the plies that is, reinforcement threads plus polymeric binder, included in the range of 0.1 to 25% and advantageously from 3 to 10%, or in the range of 20 to 60% and advantageously from 30 to 40%.

7. Process according to one of the claims 1 to 6, **characterized in that** the web of twisted threads (2) is composed of a single twisted thread deposited edge to edge according to paths essentially parallel to one another or of a number of twisted threads extending essentially parallel to one another and joined together.

8. Process according to one of the claims 1 to 7, **characterized in that** the web of twisted threads (2) is composed of a spiral of twisted threads, each wrapping being joined together with the next.

9. Process according one of the claims 1 to 8, **characterized in that** it includes steps of stacking or draping plies of unidirectional, multiaxial or fabric webs.

10. Process according to claim 9, **characterized in that** the steps of stacking or draping unidirectional, multiaxial or fabric plies of webs are performed by orienting the threads of the webs so as to obtain weight percentages for fibers within the composite part, oriented in the directions that make an angle of 0°, 45° and 135°, with isoproportion of 45° and 135°, and 90° with the main axis of the part, of 25/50/25, 40/40/20, 50/40/10 or 10/80/10.

11. Part (I) made of a composite material composed of a group of webs of superimposed reinforcement threads included at least partially in a polymer matrix, said part with at least one curved area, **characterized in that** at least one area adjacent to a curved area (5) contains a web, called web of twisted threads (2), composed of at least one reinforcement thread twisted so as to at least compensate for the differences in length that the extreme paths of the thread have on either side of their width measured parallel to the surface of the web, said web of twisted threads being constituted of:
- either one or a group of 3K carbon threads of 200 tex having a twist of 10 to 70t/m, preferably from 15 to 40t/m, when the minimal internal radius of the thread path falls within the range going from 10 to 500 mm,
- or one or a group of 6K carbon threads of 223 tex with a twist of 15 to 80t/m, preferably from 50 to 70t/m, when the minimal internal radius of the thread path falls within the range of 10 to 500 mm,
- or one or a group of 6K carbon threads of 400 tex with a twist of 15 to 80t/m, preferably from 40 to 60t/m, when the minimal internal radius of the thread path falls within the range of 10 to 500 mm,
- or one or a group of 12K carbon threads of 446 tex with a twist of 10 to 80t/m, preferably from 10 to 60t/m, when the minimal internal radius of the thread path falls within the range of 10 to 500 mm,
- or one or a group of 24K carbon threads of 1040 tex with a twist of 10 to 40t/m, preferably from 10 to 25t/m, when the minimal internal radius of the thread path falls within the range of 20 to 150 mm.

12. Part according to claim 11, **characterized in that** the curved area (5) corresponds to a curved edge of the part and **in that** the twisted reinforcement threads in the web of twisted threads extend over a path essentially parallel to the curved edge.

13. Part according to claim 12, **characterized in that** the curved edge defines an opening.

14. Part according to one of the claims 11 to 13, **characterized in that** the web of twisted threads (2) is composed of a single thread with a twist essentially identical over its entire length or a number of threads twisted individually and having among them and over their entire length, an essentially identical twist.

15. Part according to one of the claims 11 to 14, **characterized in that** the polymer matrix is selected from among thermosetting polymers, thermoplastic polymers and mixtures of said polymers.

16. Part according to one of the claims 11 to 15, **characterized in that** the percentage by weight of the polymer matrix relative to the total weight of the part falls within the range of 20 to 60% and advantageously from 30 to 40%.

17. Part according to one of the claims 11 to 16, **characterized in that** the web of twisted threads (2) is composed of a single twisted thread deposited edge to edge according to paths essentially parallel to one another or of a number of twisted threads extending essentially parallel to one another and joined together.

18. Part according to one of the claims 11 to 17, **characterized in that** the web of twisted threads (2) contains a spiral of twisted threads, each wrapping being joined together with the next.

19. Part according to one of the claims 11 to 18, **characterized in that** at least one part of the constituent webs of the part is unidirectional, multiaxial or fabric webs.

20. Part according to claim 19, **characterized in that** the orientations of the unidirectional, multiaxial or fabric webs are selected so as to obtain weight percentages for fibers in the composite part, oriented in the directions that make an angle of 0°, 45° and 135°, with isoproportion of 45° and 135°), and 90° with the main axis of the part, respectively of 25/50/25, 40/40/20, 50/40/10 or 10/80/10.

21. Part according to one of the claims 11 to 20 having the shape of a connecting rod bearing or rod attachment.

22. Part according to one of the claims 11 to 20 having the shape of a frame reinforcement element for a door corner, trap door, manhole or access door, a porthole frame or windshield frame, a bore for assembly, an attachment part or a part comprising a load input area, such as a mounting area.
